# EUROPÄISCHE PATENTSCHRIFT

(11) **EP 2 707 260 B1**
(45) Veröffentlichungstag und Bekanntmachung des Hinweises auf die Patenterteilung: **12.07.2017**
(21) Anmeldenummer: 12721504.4
(22) Anmeldetag: 11.05.2012
(51) Int. Cl.: B60T 7/04, B60T 7/10, B60T 7/20, B60T 8/32, B60T 13/26, B60T 13/66, B60T 13/68, B60T 15/18, B60T 17/04, B60T 17/22

(54) **PARKBREMSEINRICHTUNG**
PARKING BRAKE DEVICE
DISPOSITIF FREIN DE STATIONNEMENT

(30) Priorität: 13.05.2011 DE 102011101438
(43) Veröffentlichungstag der Anmeldung: 19.03.2014
(73) Patentinhaber: KNORR-BREMSE Systeme für Nutzfahrzeuge GmbH, 80809 München (DE)
(72) Erfinder: HERGES, Michael, 80935 München (DE)
(86) Internationale Anmeldenummer: PCT/EP2012/058757
(87) Internationale Veröffentlichungsnummer: WO 2012/156306

(56) Entgegenhaltungen:
- EP-A1- 2 133 250
- EP-A2- 2 058 186
- EP-A2- 2 058 193
- DE-A1-102007 008 504
- DE-A1-102007 016 335
- DE-A1-102007 047 691
- DE-A1-102008 007 709
- DE-B3-102008 007 877
- DE-B3-102009 059 816
- DE-B4-102007 061 908

## Beschreibung

Die Erfindung bezieht sich auf eine Parkbremseinrichtung gemäß dem Oberbegriff des Patentanspruches 1.

Eine solche Parkbremseinrichtung ist aus der DE 10 2009 059 816 B3 bekannt. Diese Parkbremseinrichtung hat ein bistabiles Parkbremsventil, ein Relaisventil, eine Federspeicherbremse und elektrisch betätigbare Ventile, wobei die elektrisch betätigbaren Ventile das Parkbremsventil wahlweise mit Vorratsdruck oder Atmosphäredruck verbinden und ein Ausgang des Parkbremsventils das Relaisventil ansteuert, wobei das Relaisventil die Federspeicherbremse ansteuert. Das Parkbremsventil hat einen verschieblichen, von einer Feder belasteten Kolben mit einer wirksamen Kolbenfläche, die in einem von einer gehäusefesten Fläche begrenzten Raum angeordnet ist. Bei Druckbeaufschlagung dieses Raumes wird der Kolben gegen die Kraft der Feder verschoben.

Aus der DE 10 2008 007 877 B3 ist eine weitere Parkbremseinrichtung bekannt. Dort wird ein Federspeicher-Bremszylinder von einem Relaisventil angesteuert, das seinerseits über ein bistabiles Sicherheitsventil angesteuert wird. Die Bistabilität wird durch eine pneumatische Rückkopplung erreicht, indem ein Select-Low-Ventil den kleineren von zwei Drücken, der am Ausgang oder am Eingang des Sicherheitsventils anliegt, an einen Steuereingang des Sicherheitsventils durchschaltet. Das Sicherheitsventil ist ein 3/2-Wegeventil mit zwei Eingängen und einem Ausgang. Der erste Eingang ist über ein erstes Magnetventil wahlweise mit einer Druckmittelquelle oder Atmosphärendruck verbindbar. Der zweite Eingang ist über ein zweites Magnetventil ebenfalls wahlweise mit Druckmittelquelle oder Atmosphärendruck verbindbar. Das Sicherheitsventil verbindet je nach Schaltstellung seinen Ausgang mit einem der beiden Eingänge. Die Bistabilität des Sicherheitsventils ist somit auch bei Stromausfall gewährleistet.

Die DE 10 2005 058 799 A1 beschreibt eine Parkbremseinrichtung, bei der Federspeicher-Bremszylinder über ein Relaisventil angesteuert werden, das seinerseits über ein 3/2-Wege-Sicherheitsventil ansteuerbar ist. Dieses Sicherheitsventil verbindet wahlweise seinen Ausgang mit einer Druckluftquelle oder Atmosphärendruck. Zweck dieser Parkbremseinrichtung ist es, dem Fahrer zu ermöglichen, bei Ausfall der elektrischen Stromversorgung durch Betätigen der Betriebsbremse die Parkbremse zu aktivieren.

Die DE 10 2007 061 908 B4 zeigt eine Parkbremseinrichtung mit einem Federspeicher-Bremszylinder, der über ein Relaisventil wahlweise mit einer Druckmittelquelle oder Atmosphärendruck verbindbar ist. Ein pneumatischer Steuereingang des Relaisventils ist über ein monostabiles Umschaltventil wahlweise mit der Druckmittelquelle oder Atmosphärendruck verbindbar. Der Druckmittelausgang des Relaisventils ist über ein weiteres monostabiles Umschaltventil mit dem pneumatischen Steuereingang des Relaisventils verbunden. Hierdurch ist ein steuerbarer Rückkopplungskreis für das Relaisventil geschaffen, der das Relaisventil pneumatisch jeweils in einer stabilen Position hält. Dadurch können bistabile Ventile zur Ansteuerung des Relaiventils vermieden werden.

Die DE 103 36 611 A1 zeigt eine Bremsanlage mit einer elektronischen Steuereinrichtung, die beim Empfang eines die Deaktivierung einer Feststellbrems-Funktion anfordernden elektrischen Betätigungssignals elektrisch betätigte Ventile ansteuert. Dabei wird ein bistabiles Ventil verwendet, das in einem ersten Schaltzustand Druckmittel zu einem Aktuator zuführt und in einem zweiten Schaltzustand Druckmittel von dem Aktuator abführt.

Parkbremsen von Nutzfahrzeugen einschließlich Anhängern sind heute regelmäßig mit Federspeicher-Bremszylindern ausgestattet, die in Lösestellung einen Federkompressionsraum mit Druckluft beaufschlagen und damit die Feder gespannt halten, während zum Parkbremsen der Federkompressionsraum entlüftet, d.h. mit Atmosphärendruck verbunden wird, so dass der Bremszylinder unter Wirkung der Feder eine Bremskraft erzeugt (vgl. Bosch, Kraftfahrttechnisches Taschenbuch, 22. Auflage, Düsseldorf, 1995, S. 648).

Generell sind sowohl rein pneumatische betriebene Parkbremsen bekannt, die mit vom Fahrer zu betätigenden, meist bistabilen Parkbremsventilen betrieben werden, als auch elektro-pneumatische Anlagen mit einem bistabilen elektromechanischen Ventil, das durch ein elektromechanisches bistabiles Ventil gesteuert wird. Beide Ventilstellungen für "Parkbremse" und "Lösen" müssen dabei "stabil" sein, d.h. ohne Einwirkung einer Person in der jeweils gewählten Stellung bleiben. Dies gilt auch für einen Ausfall einer elektrischen Stromversorgung für die Ventile.

Eine elektrische bzw. elektro-pneumatische Parkbremse muss daher zwei stabile, auch bei Stromausfall beizubehaltende bzw. automatisch einzunehmende Stellungen besitzen, nämlich
1. bei eingelegter Parkbremse muss dieser Zustand ohne elektrische Energie beibehalten werden;
2. während einer Fahrt müssen, zumindest solange Vorratsdruck vorhanden ist, die Federspeicher und der Parkbremseingang eines Anhängersteuerventils druckbeaufschlagt bleiben bzw. werden.

Ein ungewolltes Umschalten zwischen den beiden Zuständen muss auch im Fehlerfall verhindert werden. Als einzige Ausnahme hiervon ist zugelassen, dass bei Abriss einer pneumatischen Leitung die Federspeicherbremse aktiviert wird. In diesem Fall muss auch automatisch der Anschluss zum Anhängersteuerventil entlüftet werden.

Das Umschalten von Park- in den Fahrzustand als auch das Umschalten vom Fahr- in den Parkzustand soll elektrisch gesteuert ausgelöst werden. Wünschenswert ist weiterhin, dass ein beliebiger Druck zwischen Null und Vorratsdruck im Fahrzustand eingeregelt werden kann.

Aufgabe der Erfindung ist es daher eine Parkbremseinrichtung zu schaffen, die obige Anforderungen sicher erfüllt.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Grundgedanke der Erfindung liegt darin, ein Parkbremsventil mit einem Kolben vorzusehen, der zwei koaxiale Kolbenflächen besitzt. Es kann sich um einen Stufenkolben oder einen Koben mit zwei hintereinander liegenden Kolbenflächen handeln. In seiner Grundstellung wird der Kolben von einer Feder oder dem Vorratsdruck oder beiden an einen ersten Anschlag gedrückt, wobei ein erster Raum über der ersten Kolbenfläche in dieser Stellung gegen einen Druckanschluss abgeschlossen und mit Umgebungsdruck verbunden ist. Ein zweiter Raum über der zweiten Kolbenfläche ist ständig mit einem zweiten Anschluss verbunden, dem wahlweise Vorratsdruck oder Atmosphärendruck zugeführt wird. Beide Kolbenflächen sind groß genug, um den Kolben ab einen bestimmten Druck im jeweiligen ersten oder zweiten Raum gegen die Federkraft an den gegenüberliegenden Anschlag zu verschieben. Dieser Druck ist kleiner und insbesondere wesentlich kleiner als der Vorratsdruck. In dieser gegen die Kraft der Feder verschobenen Anschlagstellung des Kolbens ist der erste Raum mit Vorratsdruck oder einem eingeregelten Druck beaufschlagt und gegen Atmosphärendruck abgesperrt. Ein dritter Anschluss des Parkbremsventils verbindet als Ausgang den ersten Raum über der ersten Kolbenfläche mit zu steuernden Geräten.

In einem ersten Ausführungsbeispiel der Erfindung ist das zu steuernde Gerät ein Relaisventil, dessen pneumatischer Steuereingang mit dem dritten Anschluss des Parkbremsventils verbunden ist.

Der erste Anschluss des Parkbremsventils kann mittels einer elektrisch betätigten Ventilanordnung, die aus zwei 2/2-Wege-Ventilen oder einem 3/2-Wege-Ventil besteht, entweder mit Umgebungsdruck, mit Vorratsdruck oder einem Druck dazwischen beaufschlagt werden. Diese elektrisch betätigte Ventilanordnung verbindet im stromlosen Zustand mit Vorratsdruck. Der zweite Anschluss des Parkbremsventils kann mittels eines Umschaltventils, wie z.B. Mittels eines 3/2-Wege-Magentventils entweder mit Umgebungsdruck oder mit Vorratsdruck beaufschlagt werden. Dieses Umschaltventil schaltet im stromlosen Zustand nach Umgebungsdruck.

Das Parkbremsventil mit dem Kolben ist somit bistabil und ändert bei Stromausfall der Stromversorgung für die elektrisch betätigten Ventile seinen jeweils zuvor eingenommenen Zustand nicht.

Mit dem bisher geschilderten Ausführungsbeispiel der Erfindung können folgende fünf Funktionen realisiert werden:

### Funktion 1: Stabiler Parkzustand

Alle elektrischen Ventile oder Ventileinrichtungen sind unbestromt. Diese Ventileinrichtungen oder Ventile sind beispielweise Magnetventile. Es können aber auch in anderer Weise elektrisch betätigte Ventile sein, beispielsweise piezzoelektrisch oder motorisch betätigte Ventile. Am ersten Anschluss des Parkbremsventils liegt Vorratsdruck an, am zweiten Anschluss und im zweiten Raum Umgebungsdruck. Der Kolben steht in Grundstellung. Der am ersten Anschluss anliegende Vorratsdruck ist abgesperrt. Der erste Raum und damit auch der dritte Anschluss sind mit Umgebungsdruck verbunden. Etwaige Undichtigkeiten würden über diese Verbindung mit Umgebungsdruck entlüftet.

### Funktion 2: Stabiler Fahrzustand

Der Kolben steht in betätigter Stellung, ist also gegen die Kraft der Feder verschoben. Der erste Raum und damit auch der dritte Anschluss sind über den ersten Anschluss und die stromlose Ventilanordnung mit Vorratsdruck verbunden. Etwaige Undichtigkeiten würden vom Vorratsdruck nachbelüftet. Ist ein Anschluss für ein Anhängersteuermodul vorhanden, so ist dieser Anschluss mit dem ersten Anschluss verbunden. Ist ein Anhängertestventil mit einem Anschluss für ein zweites Anhängersteuermodul vorhanden, so wird dessen Steuerkolben über ein Wechselventil mit dem höheren der beiden Drücke, also in dieser Stellung mit dem Druck am ersten Anschluss verbunden. Etwaige Verluste durch Undichtigkeiten werden durch Nachströmen durch die elektrischen Ventile ausgeglichen.

### Funktion 3: Elektrisches Umschalten von Park- in den Fahrzustand

Das Umschaltventil wird bestromt. Über den zweiten Anschluss wird der zweite Raum belüftet. Der Kolben wird gegen die Kraft der Feder in seine untere Stellung bewegt. Der erste Raum wird vom Umgebungsdruck getrennt und mit dem ersten Anschluss verbunden, an dem Vorratsdruck anliegt. Die erste Kolbenfläche im ersten Raum ist ausreichend, um den Kolben in dieser Stellung zu halten. Danach kann das Umschaltventil wieder abgeschaltet werden. Der stabile Fahrzustand ist hergestellt.

### Funktion 4: Elektrisches Einregeln eines beliebigen Drucks

Es soll ein beliebiger Druck zwischen Null und Vorratsdruck eingeregelt werden. Das Umschaltventil wird bestromt. Damit hält der Druck im zweiten Raum den Kolben stabil am unteren Anschlag gegen die Kraft der Feder. Mit den übrigen Ventilen, die als Einlass- und Auslassventil wirken, kann ein beliebiger Druck zwischen Umgebungsdruck und Vorratsdruck im ersten Raum und damit auch am dritten Anschluss eingeregelt werden. Bei Stromausfall wird zwar der zweite Raum entlüftet, der erste Raum jedoch belüftet. Daher bleibt der Kolben in seiner niedergedrückten Stellung. Es muss lediglich darauf geachtet werden, dass die Durchflussquerschnitte der elektrischen Ventile und die Kolbenflächen des Kolbens so gewählt werden, dass die Summe der Drücke im ersten und zweite Raum immer genügend groß ist, um den Kolben sicher gegen die Kraft der Feder am unteren Anschlag zu halten.

### Funktion 5: Elektrisches Umschalten vom Fahr- in den Parkzustand

Ausgangssituation ist der stabile Fahrzustand (Funktion 2). Mit den elektrischen Ventilen wird der Druck am ersten Anschluss und somit auch im ersten Raum und am dritten Anschluss entlüftet. Die Feder schiebt den Kolben an seinen oberen Anschlag. Damit ist der erste Raum vom ersten Anschluss getrennt und mit Umgebungsdruck verbunden. Die elektrischen Ventile können abgeschaltet werden. Der stabile Parkzustand ist erreicht.

Das Parkbremsventil der bisher beschriebenen Art kann auch mit einem oder mehreren Anhängersteueranschlüssen zur pneumatischen Ansteuerung eines Anhängersteuermoduls oder Anhängersteuerventils ausgestattet sein.

In einer ersten Variante ist ein Anhängersteueranschluss einer ersten Art (ASM1) vorhanden, der mit dem ersten Anschluss des Parkbremsventils verbunden ist. Somit ist bei den Funktionen 1, 2 und 3 der Anhängersteueranschluss mit Vorratsdruck beaufschlagt und der Anhänger somit ungebremst. Bei der Funktion 4 erhält der Anschluss zum Anhängersteueranschluss den gleichen Druck wie das Relaisventil. Der Anhänger bremst also genau so stark wie die Federspeicherbremsen. Bei der Funktion 5 wird der Anhängersteueranschluss kurzzeitig während des Umschaltvorganges drucklos. Danach wird er wieder belüftet. Der Anhänger bremst also kurzzeitig mit dem Federspeicherbremsen mit und ist dann in der stabilen Parkstellung ungebremst.

Bei einer weiteren Variante der Anhängeransteuerung ist ein Anhängersteueranschluss einer zweiten Art (ASM2) vorgesehen, der über ein Anhänger-Testventil gesteuert wird. In der stabilen Fahrtstellung (Funktion 2) während einer gestuften Druckregelung (Funktion 4), während des Umschaltens in die stabile Fahrposition (Funktion 3) und in der stabilen Parkstellung (Funktion 1) mit dem gleichen Druck wie die Federspeicherbremse zu beaufschlagen ist. Da in allen diesen Funktionen immer Vorratsdruck zumindest an einen der ersten oder zweiten Anschlüsse des Parkbremsventils anliegt, wird der höhere dieser beiden Drücke über ein Wechselventil an den Steueranschluss eines AnhängerTestventils geleitet. Dieses verbindet dann den dritten Anschluss des Parkbremsventils mit dem Anhängersteueranschluss. Bei der Funktion 5 wird der Anhängersteueranschluss kurzzeitig drucklos. Dadurch schaltet er kurzzeitig Vorratsdruck zum Anhängersteueranschluss. Der Anhänger löst also kurzzeitig seine Bremsen, was dem Verhalten bei der nachfolgend beschriebenen Funktion 6 entspricht.

Bei dieser zweiten Variante der Anhängersteuerung schreibt der Gesetzgeber vor, dass der Fahrer jederzeit die Bremsen des Anhängers deaktivieren können muss, um festzustellen, ob der Fahrzeugverbund nur mit den Federspeichern des Zugfahrzeuges gehalten wird. Dies sollte der Fahrer beim Einlegen der Feststellbremse jedes Mal prüfen. Daraus ergibt sich die Forderung nach einer zusätzlichen sechsten Funktion.

### Funktion 6: Testfunktion

Das Lösen der Anhängerbremsen wird durch Belüften des Anhängersteueranschlusses der zweiten Art bewirkt. Die elektrischen Ventile werden nach Entlüften geschaltet. Dadurch sind beide Anschlüsse des Wechselventils drucklos. Der dritte Raum wird entlüftet. Eine Feder des Anhängertestventils schiebt dessen Steuerglied zurück und der Anschluss zum zweiten Anhängersteuermodul wird mit Vorratsdruck verbunden.

Das Anhängertestventil kann ein pneumatisch gesteuertes 3/2-Wegeventil sein, das bei drucklosem Steueranschluss den Anhängersteueranschlusses der zweiten Art mit Vorratsdruck verbindet, bei druckbeaufschlagtem Steueranschluss mit dem Druck vom dritten Anschluss des Parkbremsventils oder dem Druck vom Relaisventil. Das Anhängertestventil kann als Schieberventil oder Doppelsitzventil ausgebildet sein.

Bei einer dritten Variante der Anhängeransteuerung sind Anhängersteueranschlüsse erster und zweiter Art vorhanden. Dadurch können mit einem einzigen Parkbremsventileinrichtungstyp bei unterschiedlichen Fahrzeugen wahlweise eine der beiden Arten der Anhängeransteuerung verwendet werden.

Für die elektrischen Ventile sieht die Erfindung zwei Varianten vor. Eine erste Variante hat zwei Ventile, von denen eines ein Belüftungs- und das andere ein Entlüftungsventil ist.

Nach einer Alternative kann es ein 3/2-Ventil sein, mit dem ebenfalls eine Druckregelung möglich ist. Dabei wird in schneller Folge dieses Ventil für eine jeweils erste Zeitspanne mit Umgebungsdruck und danach für eine zweite Zeitspanne mit Vorratsdruck verbunden. Es stellt sich nach kurzer Zeit ein mittlerer Druck ein, dessen Höhe abhängig ist vom Verhältnis zwischen erster und zweiter Zeitspanne. Das Verhältnis der Zeitspannen kann abhängig von einem Solldruck anhand eines Kennfeldes gesteuert werden oder in einem geschlossenen Regelkreis mittels Drucksensor geregelt werden.

Zur genaueren und/oder schnelleren Einstellung des Druckes bei der oben genannten Funktion 4 und um eine Verbesserung der Überwachung dieser Funktion zu gewährleisten, können weitere Drucksensoren oder Druckschalter am ersten und/oder am dritten Anschluss des Parkbremsventils und/oder am Ausgang des Relaisventils vorgesehen sein.

Nach einer Weiterbildung der Erfindung kann auch eine Anti-Compound-Funktion vorgesehen sein, mit der verhindert wird, dass die Radbremsen durch Überlagerung der Zuspannkräfte von Betriebs- und Feststellbremse überlastet werden. Wird gleichzeitig zur Parkbremse auch die Betriebsbremse betätigt, so wird durch die Wirkung der Anti-Compound-Funktion die Wirkung der Federspeicherbremse in gleichem Maße durch deren Belüftung zurückgenommen, wie die Betriebsbremse angelegt wird. Die Anti-Compound-Funktion kann durch ein Wechselventil zur Steuerkammer des Relaisventils, einen zweiten Relaiskolben oder durch ein Wechselventil stromabwärts des Relaisventilausgangs realisiert werden.

Nach einer Weiterbildung der Erfindung kann die Druckluft zum Anhängersteueranschluss der zweiten Art gemäß zwei Varianten gesteuert werden. Bei der ersten Variante wird die Luft, die normalerweise, d.h. außerhalb der Testfunktion, zum zweiten Anhängersteuermodul geleistet wird, direkt vom dritten Anschluss des Parkbremsventils stammen. Damit ist der Druck zum Anhängersteueranschluss der zweiten Art bei der Funktion 4 stationär genau gleich dem Druck zum Anhängersteueranschluss der ersten Art. Außerdem ist der Druck zum Anhängersteueranschluss der zweiten Art immer unabhängig von eventuellen Modifikationen einer Anti-Compound-Funktion.

Bei der zweiten Varianten wird die Luft, die normalerweise, d.h. außerhalb der Testfunktion, zum Anhängersteueranschluss der zweiten Art geleitet wird, erst nach dem Relaisventil abgegriffen. Dadurch ist das Steuervolumen, in das die elektrische Ventileinrichtung Druck einregeln muss, unabhängig vom Volumen des Anhängersteuermoduls. Auch werden Undichtigkeiten nach dem Anhängersteueranschluss der zweiten Art vom Relaisventil automatisch ausgeglichen.

Im folgenden wird die Erfindung anhand von Ausführungsbeispielen im Zusammenhang mit der Zeichnung ausführlicher erläutert. Es zeigt:
- Fig. 1: die Parkbremseinrichtung in stabiler Parkposition;
- Fig. 2: die Parkbremseinrichtung beim Umschalten in die Fahrposition;
- Fig. 3: die Parkbremseinrichtung in der stabilen Fahrposition;
- Fig. 4: die Parkbremseinrichtung bei der Druckregelung;
- Fig. 5: die Parkbremseinrichtung beim Umschalten in die Parkposition sowie beim Anhängertest;
- Fig. 6: die Parkbremseinrichtung mit einem 3/2-Wege-Ventil zum Einregeln des Druckes;
- Fig. 7: die Parkbremseinrichtung mit einem Anhängertestventil in Form eines Doppelsitzventils;
- Fig. 8: die Parkbremseinrichtung mit nur einem Anhängersteueranschluss der ersten Art;
- Fig. 9: die Parkbremseinrichtung ohne Anhängersteueranschluss ;
- Fig. 10: die Parkbremseinrichtung mit einer ersten Variante einer Anti-Compound-Funktion;
- Fig. 11: die Parkbremseinrichtung mit einer zweiten Variante einer Anti-Compound-Funktion;
- Fig. 12: eine Variante der Parkbremseinrichtung, bei der Luft zum Anhängersteueranschluss der zweiten Art vom Relaisventil geliefert wird;
- Fig. 13: eine Variante der Parkbremseinrichtung mit Druck/-Spannungs-Wandlern zur Messung verschiedener Drücke; und
- Fig. 14: ein zweites Ausführungsbeispiel eines Parkbremsventils mit zwei hintereinander liegenden Kolbenflächen.

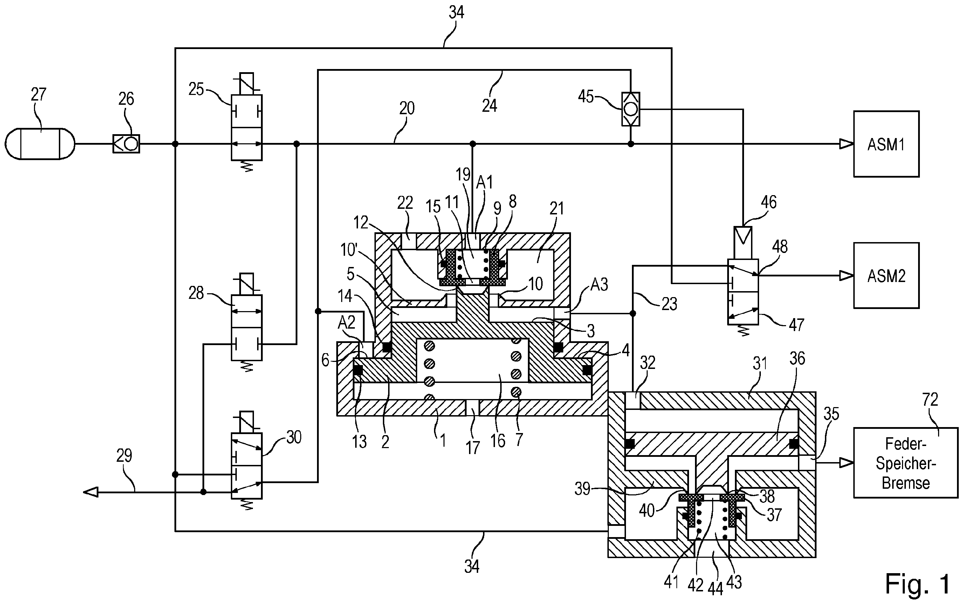

Im ersten Ausführungsbeispiel der Fig. 1 bis 5 ist ein Parkbremsventil 1 mit einem Kolben 2 gezeigt, der als Stufenkolben ausgebildet ist, der eine erste Kolbenfläche 3 und eine zweite Kolbenfläche 4 aufweist. Die erste Kolbenfläche 3 grenzt einen ersten Raum 5 ab und die zweite Kolbenfläche 4 einen zweiten Raum 6. Die beiden Kolbenflächen 3 und 4 sind koaxial zueinander und jeweils groß genug, um den Kolben 2 ab einem vorbestimmten Druck gegen Federkraft an einen Anschlag zu verschieben, wobei dieser vorbestimmte Druck kleiner ist als der Vorratsdruck. Der Kolben 2 ist von einer Feder 7 belastet, die den Kolben 2 in eine Richtung drückt, bei der die beiden Kolbenflächen 3 und 4 die beiden Räume 5 und 6 verkleinern.

Das Parkbremsventil 1 weist einen zweiten verschieblichen Kolben 8 auf, der durch eine zweite Feder 9 in Richtung zu den Kolben 2 vorgespannt ist und in Richtung auf einen ersten Ventilsitz 10. Im Boden des zweiten Kolbens 8 ist eine Öffnung 11 vorgesehen, die zum ersten Raum 5 hin weist.

Der Kolben 2 trägt einen zweiten Ventilsitz 12, der mit dem zweiten Kolben 8 zusammenwirkt. Der Kolben 2 und der zweite Kolben 8 sind jeweils über Dichtungen 13, 14, 15 an Gehäusewänden des Parkbremsventils 1 verschieblich geführt. Der Kolben 2 hat einen ersten Federraum 16, in welchem die Feder 7 angeordnet ist. Dieser Federraum 16 ist über eine Gehäuseöffnung 17 zur Atmosphäre hin entlüftet. Der zweite Kolben 8 hat einen zweiten Federraum 19, in dem die Feder 9 angeordnet ist, wobei der zweite Federraum 19 einen ersten Anschluss A1 aufweist, an den eine Steuerdruckleitung 20 angeschlossen ist.

Der erste Ventilsitz 10 trennt bei ausgefahrenem zweiten Kolben 8 den ersten Raum 5 von einer Entlüftungskammer 21, die den zweiten Kolben 8 umgibt und über eine Gehäuseöffnung 22 zur Atmosphäre hin entlüftet ist.

Der erste Raum 5 weist einen dritten Anschluss A3 auf, der den Ausgang des Parkbremsventils 1 bildet und an den eine Leitung 23 angeschlossen ist. Der zweite Raum 6 weist einen zweiten Anschluss A2 auf, an dem eine Steuerdruckleitung 20 angeschlossen ist.

Die Steuerdruckleitung 20 ist über ein erstes Ventil 25 und ein Rückschlagventil 26 mit Vorratsdruck verbunden, beispielsweise mit einem Vorratsdruckbehälter 27. Das erste Ventil 25 kann beispielsweise ein 2/2-Wegeventil sein, das im stromlosen Zustand durchgeschaltet und im bestromten Zustand abgesperrt ist. Weiter ist der Ausgang des ersten Ventils 25 mit einem zweiten Ventil 28 verbunden, das ebenfalls ein 2/2-Wegeventil sein kann. Im stromlosen Zustand ist das zweite Ventil 28 in Absperrstellung und im bestromten Zustand verbindet es die Steuerdruckleitung 20 mit einer Entlüftungsleitung 29. Das erste Ventil 25 wirkt daher als Einlassventil und das zweite Ventil 28 wirkt als Auslassventil. Beide zusammen bilden eine erste Ventilanordnung.

Die zum zweiten Raum 6 führende erste Leitung 24 ist an ein drittes Ventil 30 angeschlossen, das als Umschaltventil dient und beispielsweise ein 3/2-WegeVentil ist. Im bestromten Zustand verbindet das dritte Ventil 30 die ersten Leitung 24 mit Vorratsdruck von dem Rückschlagventil 26 und beaufschlagt daher den zweiten Anschluss A2 und damit den zweiten Raum 6 des Parkbremsventils 1 mit Vorratsdruck, im unbestromten Zustand mit Umgebungsdruck.

Das erste Ventil 25 verbindet im stromlosen Zustand den Vorratsdruck mit der Steuerdruckleitung 20 und beaufschlagt daher den ersten Anschluss A1 und damit zweiten Kolben 8 mit Vorratsdruck, der über die Öffnung 11 und den geöffneten Ventilsitz 12 den ersten Raum 5 ebenfalls mir Vorratsdruck beaufschlagt.

Der erste Raum 5 ist über den dritten Anschluss A3 und die erste Leitung 23 mit einem Relaisventil 31 verbunden und zwar mit dessen pneumatischem Steuereingang 32. Ein Druckmitteleingang des Relaisventils 31 ist über eine Leitung 34 mit Vorratsdruck verbunden und zwar mit dem Ausgang des Rückschlagventils 26. Ein Druckausgang 35 des Relaisventils 31 ist mit einem oder mehreren Federspeicher-Bremszylindern 72 verbunden.

Das Relaisventil 31 weist zwei verschiebliche Kolben 36 und 37 auf, die zusammen einen Ventilsitz 38 bilden. Weiter bildet der zweite Kolben 37 mit einer Gehäusetrennwand 39 einen zweiten Ventilsitz 40. Der zweite Kolben 37 ist durch eine Feder 41 in Richtung zum ersten Kolben 36 hin vorgespannt und besitzt an seinem Kolbenboden eine Öffnung 42 die zu einem Federraum 43 führt, der über eine Öffnung 44 im Gehäuse des Relaisventils 31 zur Atmosphäre hin entlüftet ist.

Die Leitungen 20 und 24 sind an Eingänge eines Wechselventils 45 angeschlossen, dessen Ausgang mit einem Steuereingang 46 eines Anhängertestventils 47 verbunden ist. Das Wechselventil 45 ist ein "Select-high"-Ventil, das den höheren Druck an seinen Eingängen zum Ausgang durchschaltet.

Weiter führt die Steuerdruckleitung 20 zu einem ersten Anhängersteueranschluss ASM1 während ein Ausgang 48 des Anhängertestventils 47 zu einem zweiten Anhängersteueranschluss ASM2 führt.

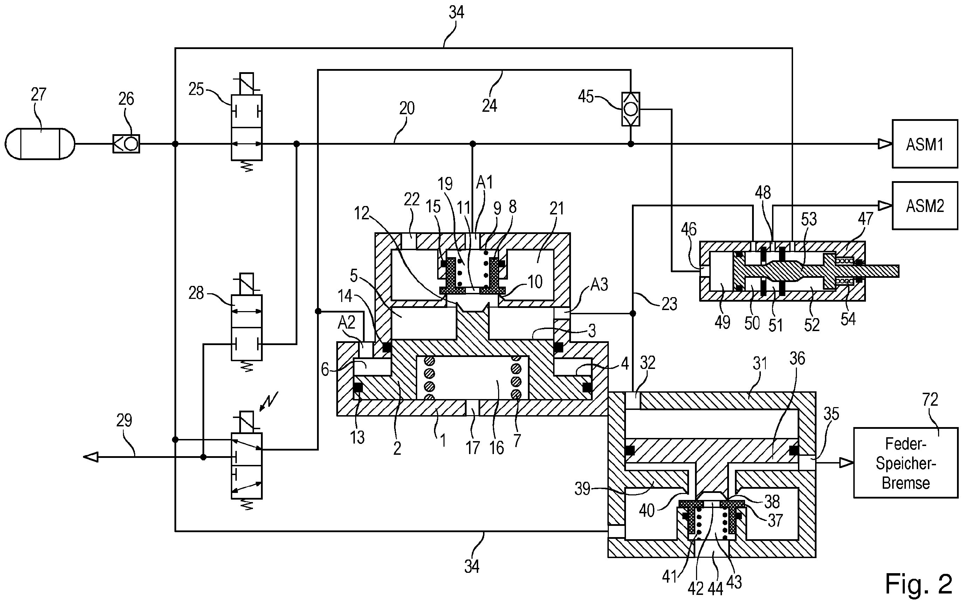

Das Anhängertestventil 47 ist ein pneumatisch gesteuertes Umschaltventil, dessen Steuereingang 46 mit dem Ausgang des Wechselventils 45 verbunden ist. Seine beiden Druckeingänge sind mit dem dritten Anschluss A3 des Parkbremsventils 1 und mit der Vorratsleitung 34 verbunden. Sein Ausgang 48 ist mit dem zweiten Anhängersteueranschluss ASM2 verbunden. Im Ausführungsbeispiel der Fig. 2 hat es vier gegeneinander abgedichtete Räume 49, 50, 51 und 52 mit einem Schieber 53, der durch eine Feder 54 belastet ist.

Der Ausgang des Wechselventils 45, der zum Steuereingang 46 des Testventils 47 führt, ist mit dem ersten Raum 49 verbunden (Fig. 2-5). Die Feder 54 drückt den Schieber 53 in Richtung zu dem ersten Raum 49. Der zweite Raum 50 des Anhängertestventils 47 ist an die Leitung 23 angeschlossen, die mit dem ersten Raum 5 des Parkbremsventils 1 verbunden ist. Der dritte Raum 51 des Anhängertestventils 47 ist je nach Stellung des Schiebers 53 mit dem zweiten Raum 50 verbunden oder demgegenüber abgedichtet. Der zweite Raum 51 ist mit dem Ausgang 48 des Anhängertestventils 47 verbunden, der zu dem zweiten Anhängersteueranschluss ASM2 führt.

Der vierte Raum 52 des Anhängertestventils 47 ist mit der Leitung 34 verbunden und damit ständig mit Vorratsdruck beaufschlagt. Je nach Stellung des Schiebers 53 ist der vierte Raum 52 mit dem dritten Raum 51 verbunden oder von ihm abgetrennt. In der Verbindungsstellung des Schiebers 53 gelangt somit Vorratsdruck von der Leitung 34 zum Ausgang 48 des Anhängertestventils 47.

Im Folgenden wird die Arbeitsweise in Zusammenhang mit den Fig. 1 bis 5 erläutert.

Fig. 1 zeigt den stabilen Parkzustand. Die drei Ventile 25, 28 und 30 sind unbestromt. Das erste Ventil 25 leitet Vorratsdruck über die Steuerdruckleitung 20 zum Anschluss A1 des Parkbremsventils 1. Das zweite Ventil 28 ist abgesperrt. Das dritte Ventil 30 entlüftet den Anschluss A2 des zweiten Raums 6. Der Kolben 2 wird durch die Feder 7 in eine Grenzstellung gedrückt, bei der der Ventilsitz 12 geschlossen und der Ventilsitz 10 geöffnet ist. Damit wird der erste Raum 5 über die Entlüftungskammer 21 und die Gehäuseöffnung 22 entlüftet und der Anschluss A3 und damit der Steuereingang 32 des Relaisventils 21 sind somit entlüftet, so dass der Kolben 37 des Relaisventils 31 durch die Feder 41 den Ventilsitz 40 schließt. Ein Restdruck der Federspeicher-Bremszylinder verschiebt den Kolben 36 des Relaisventils, so dass der Ventilsitz 38 öffnet und Druck von den Federspeicher-Bremszylindern über die Öffnung 42 im Kolben 38 und den Federraum 43 über die Öffnung 44 fließen kann. Die Federspeicher-Bremszylinder sind entlüftet und die stabile Parksituation ist gewährleistet.

Fig. 2 zeigt den Zustand des Umschaltens in eine Fahrposition, bei der die Federspeicher-Bremszylinder 72 mit Druck zu beaufschlagen sind. Das erste und zweite Ventil 25 und 28 sind stromlos, das Umschaltventil 30 ist bestromt. Damit gelangt Vorratsdruck von der Leitung 34 über das Umschaltventil 30 zum zweiten Anschluss A2 und der zweite Raum 6 ist mit Vorratsdruck beaufschlagt, wodurch der Kolben 2 gegen die Kraft der Feder 7 in eine untere Grenzstellung gedrückt wird. Weiter liegt Vorratsdruck am ersten Anschluss A1 des Parkbremsventils 1, wodurch der erste Ventilsitz 10 geschlossen wird. Der zweite Ventilsitz 12 ist durch den niedergedrückten Kolben 2 geöffnet, so dass Vorratsdruck über die Steuerdruckleitung 20, den Anschluss A1, die Öffnung 11 im zweiten Kolben 8 und den geöffneten Ventilsitz 12 in den ersten Raum 5 gelangt und damit zum Anschluss A3. Der Kolben 36 des Relaisventils 31 wird gegen den Kolben 37 gedrückt, wodurch der Ventilsitz 40 öffnet und der Ventilsitz 38 schließt. Damit gelangt Vorratsdruck von der Leitung 34 zum Druckmittelausgang 35 des Relaisventils 31 und löst den Federspeicher-Bremszylinder.

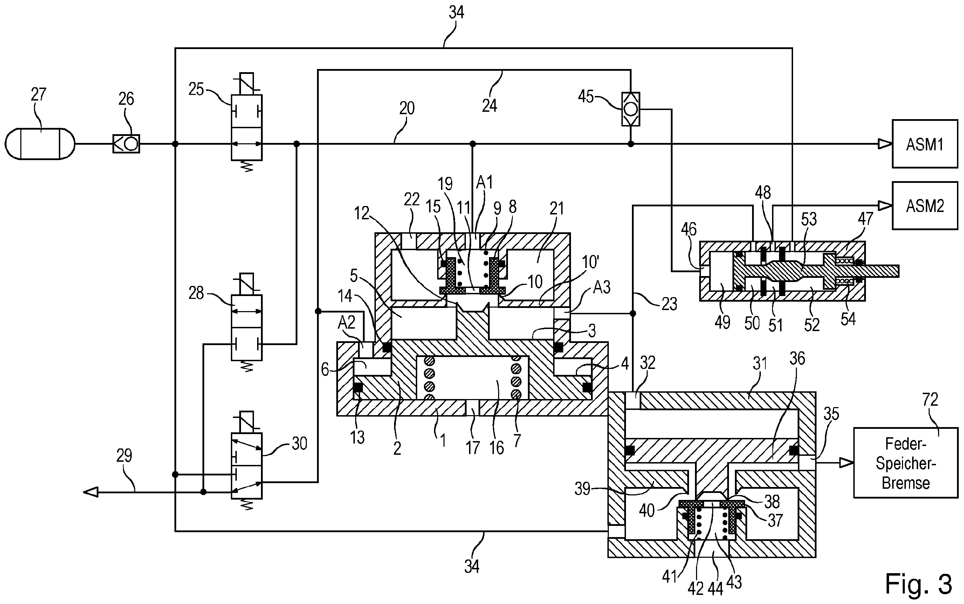

Fig. 3 zeigt den Zustand der stabilen Fahrposition nach dem Umschaltvorgang der Fig. 2. Die drei Ventile 25, 28 und 30 sind stromlos. Der erste Raum 5 ist mit Vorratsdruck beaufschlagt, wodurch der Kolben 2 in der gegen die Kraft der Feder 7 gegen den Anschlag gedrückten Stellung verbleibt. Der zweite Raum 6 ist entlüftet, jedoch reicht der Druck im ersten Raum 5 aus, den Kolben 2 niedergedrückt zu halten. Am Anschluss A3 liegt somit Vorratsdruck, der den Kolben 36 des Relaisventils 37 gegen den Kolben 37 drückt, wodurch der Ventilsitz 40 geöffnet bleibt und Vorratsdruck zu dem Ausgang 35 des Relaisventils 31 und damit zu den Federspeicher-Bremszylindern gelangt. Die Federspeicherbremse ist damit gelöst. Der Steuereingang 46 des Anhängertestventils 47 ist über das Wechselventil 45 mit Vorratsdruck beaufschlagt. Der Vorratsdruck vom Anschluss A3 gelangt somit von der Kammer 50 in die Kammer 51 und damit zum zweiten Anhängersteueranschluss ASM2. Der erste Anhängersteueranschluss ASM1 ist unmittelbar über das erste Ventil 25 mit Vorratsdruck versorgt.

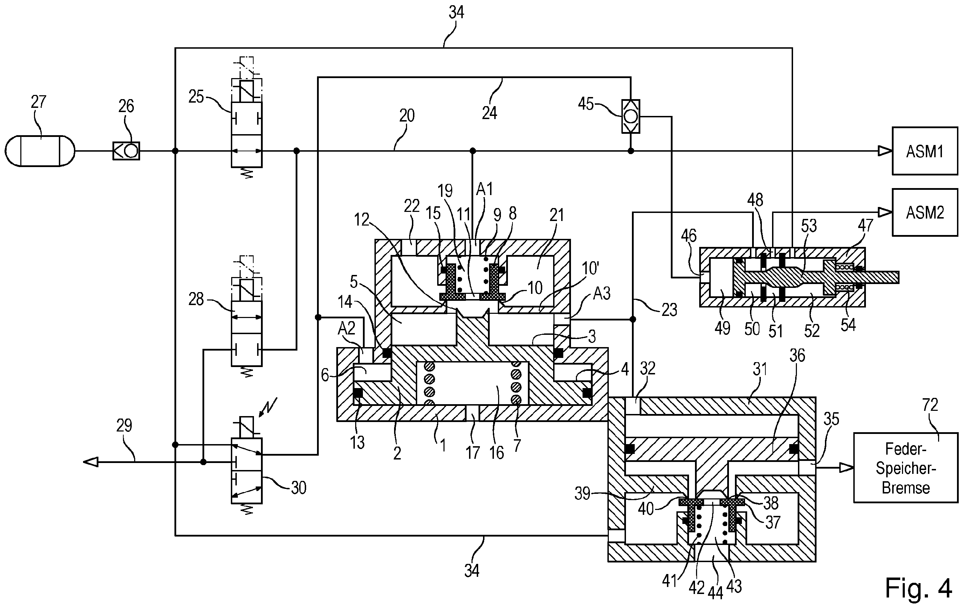

Fig. 4 zeigt den Zustand des elektrischen Einregelns eines beliebigen Druckes zwischen Null und Vorratsdruck im Fahrzustand. Das Umschaltventil 30 ist bestromt. Am zweiten Anschluss A2 liegt Vorratsdruck, der den Kolben 2 stabil in der unteren Grenzstellung gegen die Kraft der Feder 7 hält. Über die beiden Ventile 25 und 28 kann dann ein beliebiger Druck zwischen Umgebungsdruck und Vorratsdruck im ersten Raum 5 und damit am dritten Anschluss A3 eingeregelt werden.

Bei Stromausfall wird zwar der zweite Raum 6 entlüftet, der erste Raum 5 jedoch belüftet, so dass der eingeregelte Druck an den beiden Anhängersteueranschlüssen ASM1 und ASM2 und den Federspeicher-Bremszylindern 72 erhalten bleibt. Es muss lediglich darauf geachtet werden, dass die Summe der Drücke im ersten und zweiten Raum 5 und 6 immer genügend groß ist, um den Kolben 2 sicher gegen die Feder 7 am unteren Anschlag zu halten.

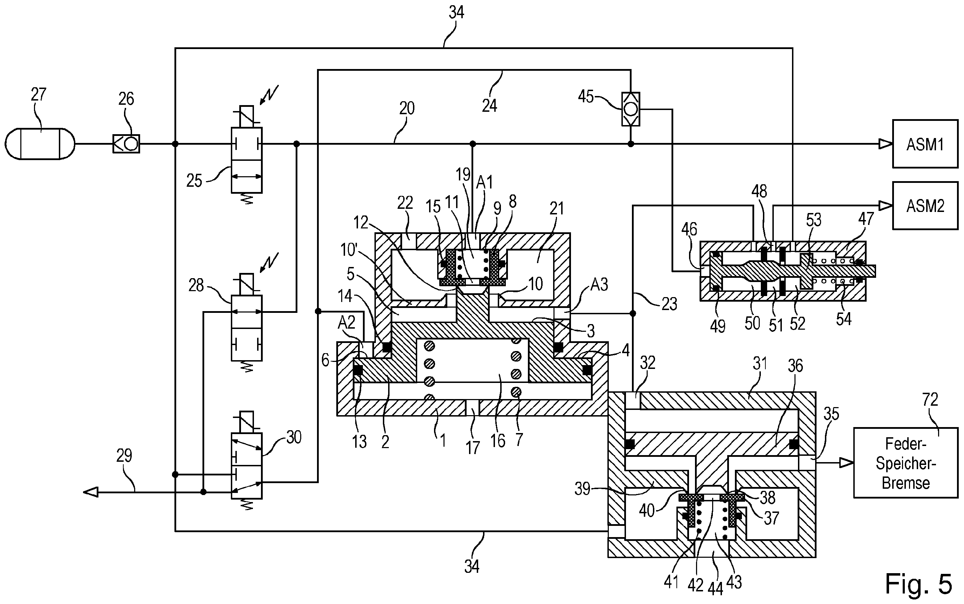

Fig. 5 zeigt den Zustand des Umschaltens in die Parkposition. Das erste und zweite Ventil 25 und 28 sind bestromt. Das Umschaltventil 30 ist stromlos. Der erste Raum 5 und der zweite Raum 6 sind entlüftet. Die Feder 7 drückt den Kolben 2 nach oben gegen den Kolben 8, verschließt den Ventilsitz 12 und öffnet den Ventilsitz 10. Der erste Raum 5 wird über die Entlüftungsöffnung 22 entlüftet. Der Anschluss A3 ist drucklos und das Relaisventil 31 kann die Federspeicher-Bremszylinder 72 über den geöffneten Ventilsitz 38 bei geschlossenem Ventilsitz 40 über die Öffnungen 42 und 44 entlüften.

Der Steuereingang 46 des Anhängertestventils 47 ist drucklos und der Schieber 53 wird durch die Feder 54 gegen einen Endanschlag verschoben, so dass die Kammern 51 und 52 miteinander verbunden sind und der zweite Anhängersteueranschluss ASM2 über das Anhängertestventil 47 mit Vorratsdruck beaufschlagt ist. Alle elektrisch betätigten Ventile 25, 28 und 30 können abgeschaltet werden und ein stabiler Parkzustand ist erreicht.

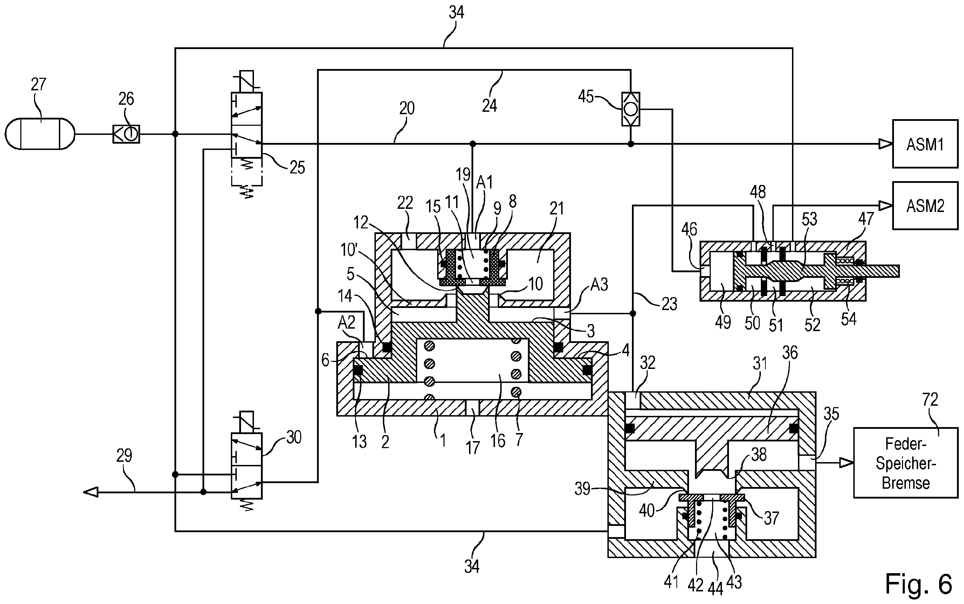

Fig. 6 zeigt eine Variante der Erfindung, bei dem das erste Ventil 25 ein Umschaltventil ist, wie z.B. ein 3/2-Wege-Magnetventil. Das Parkbremsventil 1 und das Relaisventil 31 sind jeweils in Fahrtstellung, d.h. die Federspeicherbremse 72 ist mit Druck beaufschlagt und damit gelöst. Die beiden Anhängersteueranschlüsse ASM1 und ASM2 sind mit Arbeitsdruck beaufschlagt, der durch das erste Ventil 25 elektrisch geregelt werden kann.

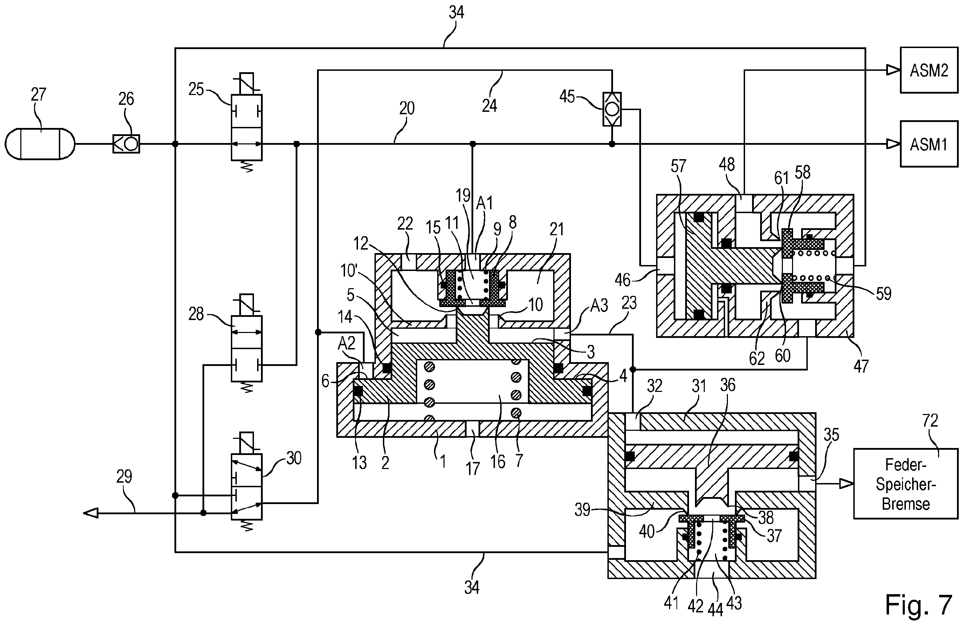

Fig. 7 zeigt eine Variante der Erfindung, bei der das Anhängertestventil 47 als Doppelsitzventil ausgebildet ist und ähnlich dem Relaisventil 31 zwei verschiebliche Kolben 57 und 58 aufweist, von denen der Kolben 58 durch eine Feder 59 vorgespannt ist. Ein erster Ventilsitz 60 wird zwischen den beiden Kolben 57 und 58 und ein zweiter Ventilsitz 61 wird zwischen dem zweiten Kolben 58 und einer Gehäusewand 62 gebildet. Liegt am Steueranschluss 46 Druckluft an, so wird der Ventilsitz 60 geschlossen und der Ventilsitz 61 geöffnet. Druckmittel vom Anschluss A3 gelangt dann zum Ausgang 48 und damit zum Anhängersteueranschluss ASM2.

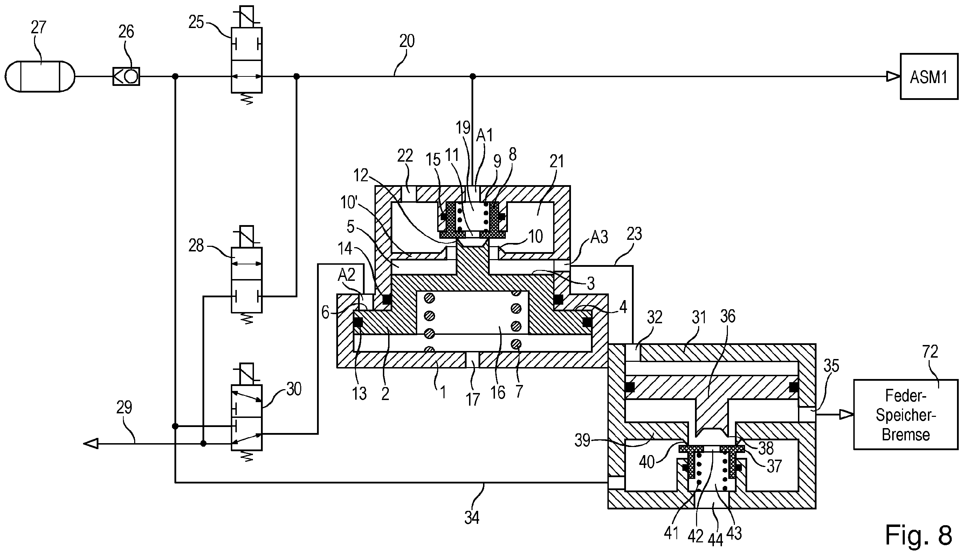

Bei der Variante der Fig. 8 ist der zweite Anhängersteueranschluss ASM2 fortgelassen. In stabiler Parkposition ist das Anhängersteuermodul ASM1 belüftet und die Federspeicherbremse 72 ist entlüftet. Die übrigen Positionen werden analog dem Ausführungsbeispiel der Fig. 1 bis 5 eingenommen.

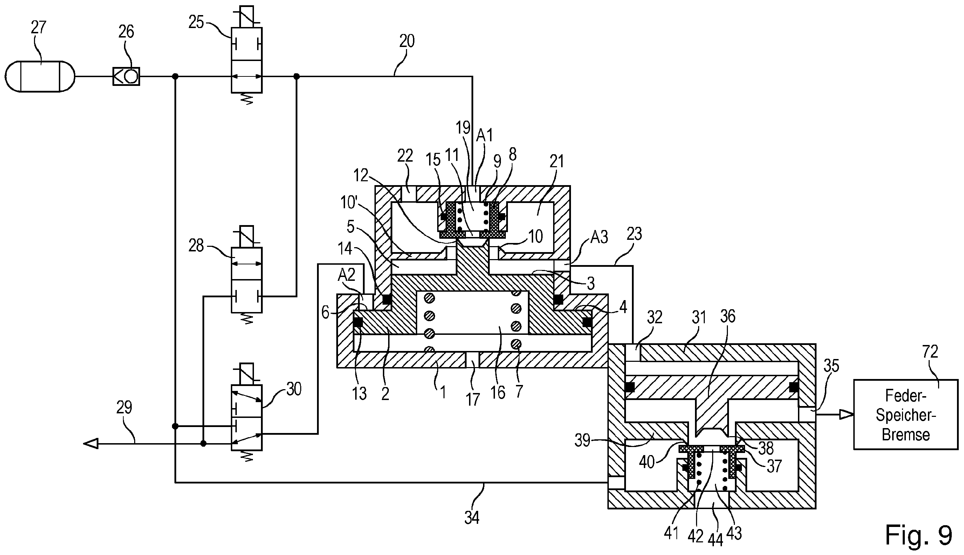

Fig. 9 zeigt eine Variante ohne Anhänger. Die beiden Anhängersteueranschlüsse ASM1 und ASM2 sind fortgelassen sowie auch das Anhängertestventil. Der Ausgang A3 des Parkbremsventils 1 ist somit nur mit dem Relaisventil 31 verbunden.

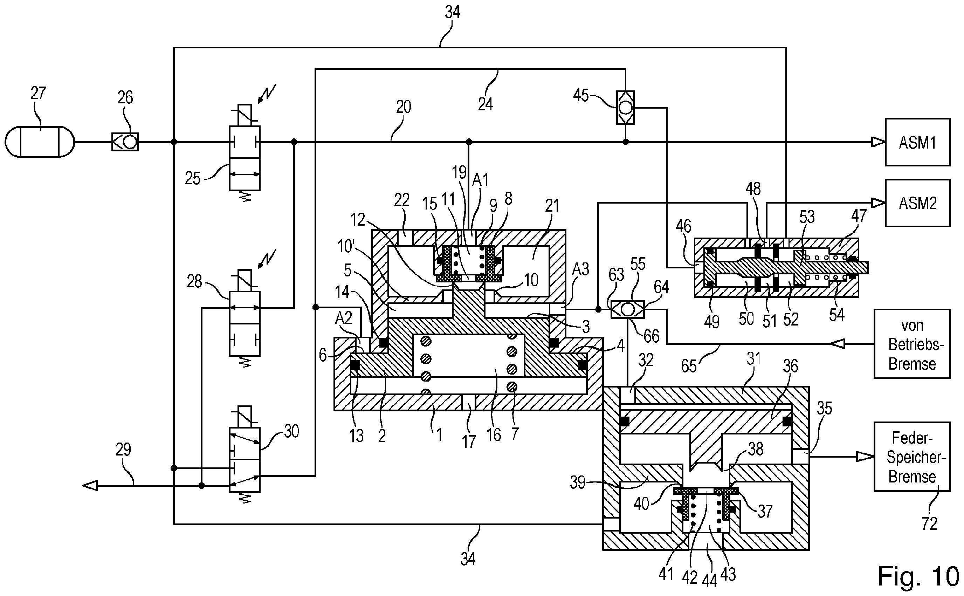

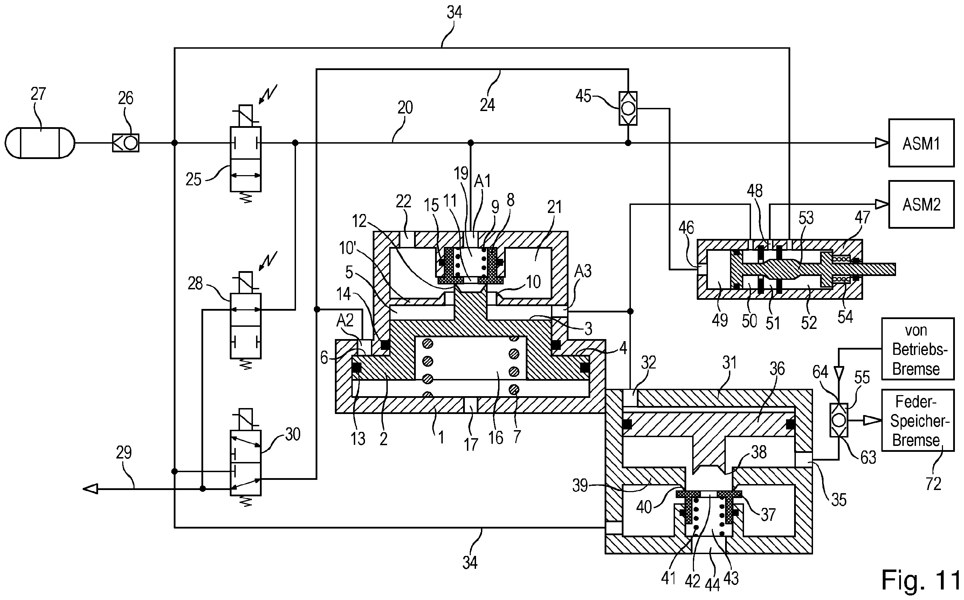

Die Varianten der Fig. 10 und 11 haben noch eine sogenannte Anti-Compound-Funktion, mit der verhindert wird, dass die Radbremsen durch Überlagerung der Zuspannkräfte von Betriebs- und Feststellbremse (Federspeicherbremse) überlastet werden. Wird gleichzeitig zur Parkbremse auch die Betriebsbremse betätigt, so wird die Wirkung der Federspeicherbremse im gleichen Maße durch Belüftung zurückgenommen.

Zu diesem Zweck ist zwischen dem Anschluss A3 des Parkbremsventils 1 und den pneumatischen Steuereingang 32 des Relaisventils 31 ein zweites Wechselventil 55 geschaltet, dessen erster Eingang 63 mit dem Ausgang A3 und dessen zweiter Eingang 64 mit einer Druckleitung 65 der Betriebsbremse verbunden ist und dessen Ausgang 65 mit dem pneumatischen Steuereingang 32 des Relaisventils 31 verbunden ist. Wird in der stabilen Parkstellung Druck an die Betriebsbremse angelegt, schließt der Ventilsitz 38 und der Ventilsitz 40 öffnet, so dass die Federspeicherbremse mit Betriebsbremsdruck beaufschlagt wird und somit die Zustellkraft der Betriebsbremse kompensiert.

Bei der Variante der Fig. 11 ist das Wechselventil 55 mit seinem ersten Eingang 63 mit dem Druckmittelausgang 35 des Relaisventils verbunden und mit seinem zweiten Eingang 64 mit der Druckmittelleitung der Betriebsbremse. Auch hierdurch wird die gewünschte Anti-Compound-Funktion realisiert. Bei beiden Varianten ist das Wechselventil 55 ein "Select-high"-Ventil.

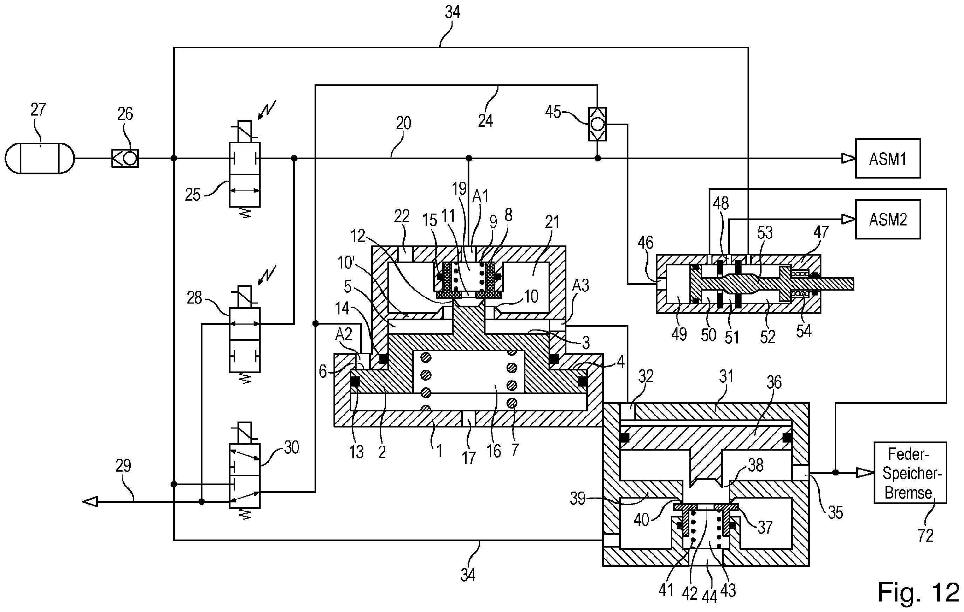

Fig. 12 zeigt eine Variante der Erfindung, bei der das Anhängertestventil 47 Versorgungsluft vom Druckmittelausgang 35 des Relaisventils 31 erhält. Damit wird dem Anhängersteueranschluss ASM2 im Ergebnis der selbe Druck zugeführt wie der Federspeicherbremse 72. Die Anti-Compound-Funktion-Variante mit Wechselventil am Steueranschluss 32 des Relaisventils ist bei dieser Variante nicht vorgesehen.

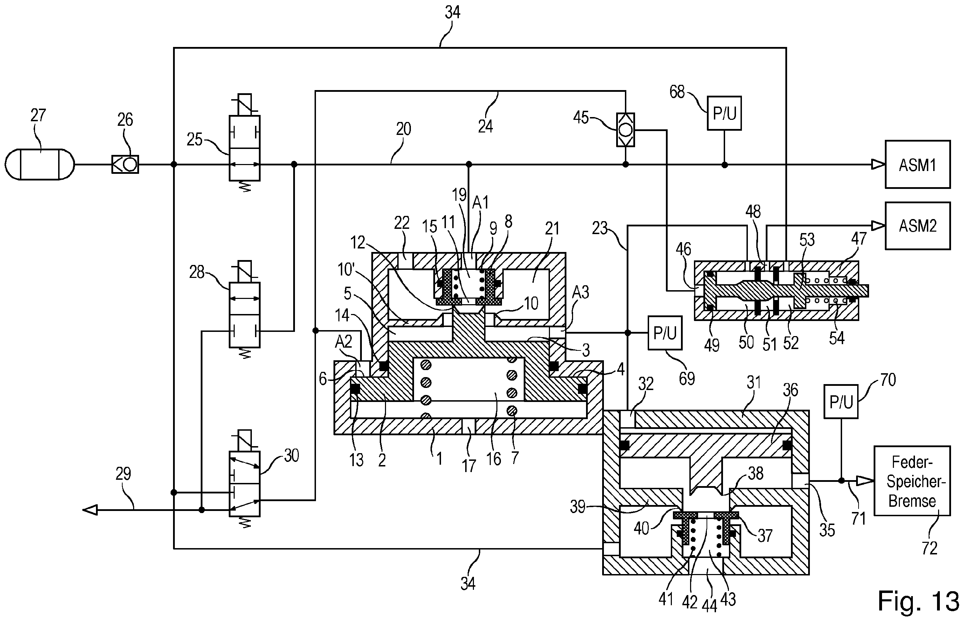

Fig. 13 zeigt eine Variante mit Drucksensoren 68, 69 und 70 an den Leitungen 20, 23 und der mit dem Druckmittelausgang 35 des Relaisventils 31 verbundenen Leitung 71, die zur Federspeicherbremse führt.

Über die Drucksensoren, die Druck/-Spannungswandler sind, können die Druckwerte gemessen und in einer elektronischen Steuereinheit ausgewertet werden, wobei die elektronische Steuereinheit die elektrischen Ventile 25, 28 und 30 ansteuern kann, um gewünschte Drücke einzuregeln.

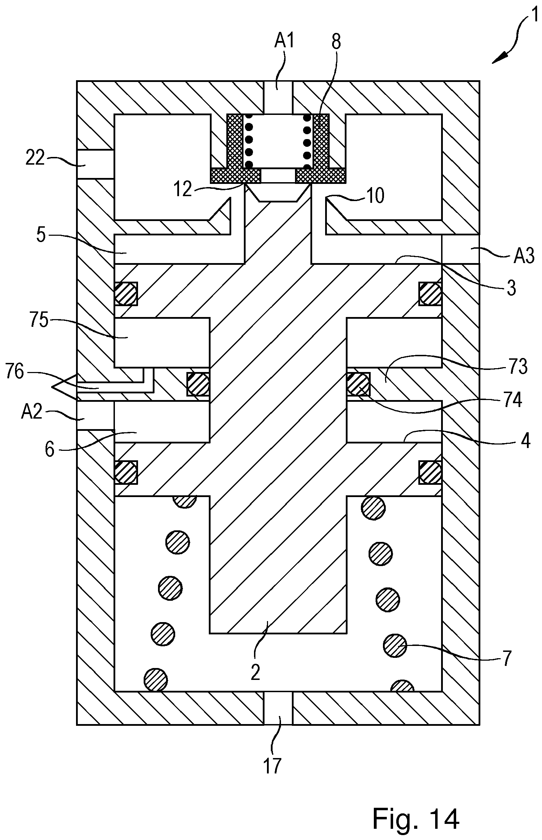

Fig. 14 zeigt eine Variante des Parkbremsventils 1 mit den Anschlüssen A1, A2 und A3, das bei der Parkbremseinrichtung der Fig. 1 bis 13 verwendet werden kann. Im Gegensatz zu den Ausführungsbeispielen der Fig. 1 bis 13 handelt es sich hier um ein Parkbremsventil mit einem Kolben, der zwei axial hintereinander liegende Kolbenflächen 3 und 4 aufweist, die die beiden Räume 5 und 6 abgrenzen. Die beiden Kolbenflächen 3 und 4 haben daher denselben Außendurchmesser. Dem Fachmann ist klar, dass der in den Fig. 1 bis 13 gezeigte Stufenkolben dieselben Funktionen ausführen kann wie das Parkbremsventil der Fig. 14. Ein Kolben nach Fig. 14 hat gegenüber einem Stufenkolben den Vorteil der schmäleren, der Stufenkolben den Vorteil der kürzeren Bauform.

Das Parkbremsventil 1 der Fig. 14 hat noch eine Trennwand 73 mit Dichtung 74, die einen weiteren Raum 75 bildet, der durch eine Öffnung 76 mit Umgebungsdruck verbunden ist, um die Verschieblichkeit des Kolbens 2 zu gewährleisten.

Abschließend sei noch darauf hingewiesen, dass die oben beschriebenen Kolben 8, 37 und 58 auch Manschetten von Doppelsitzventilen sein können.

## Patentansprüche

1. Parkbremseinrichtung mit einem bistabilen Parkbremsventil (1), einem Relaisventil (31), einer Federspeicherbremse (72) und elektrisch betätigbaren Ventilen (25, 28, 30),
wobei die elektrisch betätigbaren Ventile (25, 28, 30) das Parkbremsventil (1) wahlweise mit Vorratsdruck oder Atmosphärendruck verbinden, ein Ausgang (A3) des Parkbremsventils (1) das Relaisventil (31) ansteuert und das Relaisventil (31) die Federspeicherbremse (72) ansteuert,
wobei das Parkbremsventil (1) einen verschieblichen, von einer Feder (7) belasteten Kolben (2) aufweist,
**dadurch gekennzeichnet,**
**dass** der Kolben (2) mit zwei koaxialen Kolbenflächen (3, 4) aufweist, die einen ersten Raum (5) und einen zweiten Raum (6) abgrenzen,
**dass** der erste Raum (5) in Abhängigkeit von der Stellung des Kolbens (2) mit Vorratsdruck, Atmosphärendruck oder einem zwischen diesen beiden Drücken liegenden Druck beaufschlagbar ist, der dem Ausgang (A3) des Parkbremsventils (1) zuführbar ist und
**dass** der zweite Raum (6) durch ein elektrisch betätigbares Ventil (30) wahlweise mit Vorratsdruck oder Atmosphärendruck verbindbar ist.

2. Parkbremseinrichtung nach Anspruch 1, **dadurch gekennzeichnet,**
**dass** das Parkbremsventil (1) einen zweiten verschieblichen, von einer zweiten Feder (9) belasteten Kolben (8) aufweist, der mit einer Gehäusewand (10') einen ersten Ventilsitz (10) und mit dem Kolben (2) einen zweiten Ventilsitz (12) bildet, wobei die Ventilsitze (10, 12) so angeordnet sind, dass bei Überschreiten eines vorbestimmten Druckes in den beiden Räumen (5, 6) der erste Ventilsitz (10) geschlossen und der zweite Ventilsitz (12) geöffnet ist und dabei Vorratsdruck von einem ersten Anschluss (A1) des Parkbremsventils (1) in den ersten Raum (5) und damit zum Relaisventil (31) gelangt.

3. Parkbremseinrichtung nach Anspruch 2, **dadurch gekennzeichnet,**
**dass** die Ventilsitze (10, 12) so angeordnet sind, dass bei Unterschreiten eines vorbestimmten Druckes in beiden Räumen (5, 6) der erste Ventilsitz (10) öffnet und der zweite Ventilsitz (12) schließt und dabei der erste Raum (5) und damit der dritte Anschluss (A3) über eine Öffnung (22) des Parkbremsventils (1) mit Atmosphärendruck verbunden ist.

4. Parkbremseinrichtung nach einem der Ansprüche 1 bis 3, **dadurch gekennzeichnet,**
**dass** ein zweiter Anschluss (A2), der mit dem zweiten Raum (6) verbunden ist, über ein elektrisch steuerbares Ventil (30) wahlweise mit Vorratsdruck oder Atmosphärendruck verbindbar ist.

5. Parkbremseinrichtung nach Anspruch 2, **dadurch gekennzeichnet,**
**dass** der erste Anschluss (A1) des Parkbremsventils (1) über mindestens ein Ventil (25, 28) wahlweise mit Vorratsdruck oder Atmosphärendruck verbindbar ist.

6. Parkbremseinrichtung nach einem der Ansprüche 1 bis 5, **dadurch gekennzeichnet,**
**dass** der Ausgang (A3) des Parkbremsventils (1) zusätzlich mit einem Anhängertestventil (47) verbunden ist, dessen pneumatischer Steuereingang (46) über ein Wechselventil (45) mit dem höheren der Drücke am ersten Anschluss (A1) und am zweiten Anschluss (A2) verbunden ist.

7. Parkbremseinrichtung nach Anspruch 6, **dadurch gekennzeichnet,**
**dass** das Anhängertestventil (47) ein Schiebeventil oder ein Doppelsitzventil ist.

8. Parkbremseinrichtung nach einem der Ansprüche 1 bis 7, **dadurch gekennzeichnet,**
**dass** zwischen den Ausgang (A3) des Parkbremsventils (1) und den pneumatischen Steuereingang (32) des Relaisventils (31) ein Wechselventil (64) geschaltet ist, dessen erster Eingang (63) mit dem Ausgang (A3) des Parkbremsventils (1) und dessen zweiter Eingang (64) mit einer Druckmittelleitung einer Betriebsbremse verbunden ist, wobei das Wechselventil (55) den höheren der Drücke an seinen beiden Eingängen (63, 64) zum Steuereingang (32) des Relaisventils (31) leitet.

9. Parkbremseinrichtung nach einem der Ansprüche 1 bis 7, **dadurch gekennzeichnet,**
**dass** der Ausgang (35) des Relaisventils (31) mit einem Eingang (63) eines Wechselventils (55) verbunden ist, dessen zweiter Eingang (64) mit Druckmittel von einer Betriebsbremse verbunden ist und dessen Ausgang (66) mit der Federspeicherbremse (72) verbunden ist.

10. Parkbremseinrichtung nach einem der Ansprüche 6 bis 9, **dadurch gekennzeichnet,**
**dass** ein Druckmitteleingang des Anhängertestventils (47) mit dem Ausgang (35) des Relaisventils (31) verbunden ist.

11. Parkbremseinrichtung nach einem der Ansprüche 1 bis 10, **dadurch gekennzeichnet,**
**dass** Drucksensoren (68, 69, 70) an den ersten Anschluss (A1) und/oder den Ausgang (A3) des Parkbremsventils (1) und/oder den Ausgang (35) des Relaisventils (31) angeschlossen sind.

12. Parkbremseinrichtung nach einem der Ansprüche 1 bis 11, **dadurch gekennzeichnet,**
**dass** das Parkbremsventil (1) einen Stufenkolben (2) mit zwei koaxialen Kolbenflächen aufweist.

13. Parkbremseinrichtung nach einem der Ansprüche 1 bis 11, **dadurch gekennzeichnet,**
**dass** die elektrisch betätigbaren Ventile (25, 28, 30) Magnetventile sind.

## Claims

1. Parking brake device having a bi-stable parking brake valve (1), a relay valve (31), a spring brake (72) and electrically actuated valves (25, 28, 30),
wherein the electrically actuated valves (25, 28, 30) connect the parking brake valve (1) selectively to supply pressure or atmospheric pressure, an outlet (A3) of the parking brake valve (1) controls the relay valve (31) and the relay valve (31) controls the spring brake (72),
wherein the parking brake valve (1) has a movable piston (2) loaded by a spring (7),
**characterised in that**
the piston (2) has two coaxial piston faces (3, 4), which delimit a first space (5) and a second space (6),
the first space (5), in dependence upon the position of the piston (2), can be impacted with supply pressure, atmospheric pressure or a pressure lying between these two pressures, which can be fed to the outlet (A3) of the parking brake valve (1) and
the second space (6) can be connected by an electrically actuated valve (30) selectively to supply pressure or atmospheric pressure.

2. Parking brake device according to claim 1,
**characterised in that**
the parking brake valve (1) has a second movable piston (8) loaded by a second spring (9), the piston (8) forming, with a housing wall (10'), a first valve seat (10) and with the piston (2) a second valve seat (12), wherein the valve seats (10, 12) are arranged so that, if a predetermined pressure is exceeded in the two spaces (5, 6), the first valve seat (10) is closed and the second valve seat (12) is opened and supply pressure thereby passes from a first port (A1) of the parking brake valve (1) into the first space (5) and thus arrives at the relay valve (31).

3. Parking brake device according to claim 2,
**characterised in that** the valve seats (10, 12) are arranged so that, if a predetermined pressure is undershot in both the spaces (5, 6), the first valve seat (10) opens and the second valve seat (12) closes, and the first space (5) and thus the third port (A3) is connected via an opening (22) of the parking brake valve (1) to atmospheric pressure.

4. Parking brake device according to one of claims 1 to 3, **characterised in that**
a second port (A2), which is connected to the second space (6), can be connected via an electrically controllable valve (30) selectively to supply pressure or atmospheric pressure.

5. Parking brake device according to claim 2,
**characterised in that**
the first port (A1) of the parking brake valve (1) can be connected via at least one valve (25, 28) selectively to supply pressure or atmospheric pressure.

6. Parking brake device according to one of claims 1 to 5,
**characterised in that**
the outlet (A3) of the parking brake valve (1) is additionally connected to a trailer test valve (47), of which the pneumatic control inlet (46) is connected via a shuttle valve (45) to the higher of the pressures at the first port (A1) and at the second port (A2).

7. Parking brake device according to claim 6,
**characterised in that**
the trailer test valve (47) is a slide valve or a double seated valve.

8. Parking brake device according to one of claims 1 to 7,
**characterised in that**
a shuttle valve (64) is arranged between the outlet (A3) of the parking brake valve (1) and the pneumatic control inlet (32) of the relay valve (31), of which the first inlet (63) is connected to the outlet (A3) of the parking brake valve (1) and of which the second inlet (64) is connected to a pressure medium line of a service brake, wherein the shuttle valve (55) feeds the higher of the pressures at its two inlets (63, 64) to the control inlet (32) of the relay valve (31).

9. Parking brake device according to one of claims 1 to 7,
**characterised in that**
the outlet (35) of the relay valve (31) is connected to an inlet (63) of a shuttle valve (55), of which the second inlet (64) is connected to pressure medium of a service brake, and of which the outlet (66) is connected to the spring brake (72).

10. Parking brake device according to one of claims 6 to 9,
**characterised in that**
a pressure medium inlet of the trailer test valve (47) is connected to the outlet (35) of the relay valve (31).

11. Parking brake device according to one of claims 1 to 10, **characterised in that**
pressure sensors (68, 69, 70) are attached to the first port (A1) and / or the port (A3) of the parking brake valve (1) and / or the outlet (35) of the relay valve (31).

12. Parking brake device according to one of claims 1 to 11, **characterised in that**
the parking brake valve (1) has a stepped piston (2) with two coaxial piston faces.

13. Parking brake device according to one of claims 1 to 11, **characterised in that**
the electrically actuated valves (25, 28, 30) are solenoid valves.

## Revendications

1. Dispositif de frein de stationnement, comprenant une soupape (1) de frein de stationnement bistable, une soupape (31) relais, un frein (72) à ressort accumulateur et des soupapes (25, 28, 30) à actionnement électrique, dans lequel les soupapes (25, 28, 30) à actionnement électrique relient la soupape (1) de frein de stationnement, au choix, à une pression de réserve ou à la pression atmosphérique, une sortie (A3) de la soupape (1) de frein de stationnement commande la soupape (31) relais et la soupape (31) relais commande le frein (72) à ressort accumulateur,
dans lequel la soupape (1) de frein de stationnement a un piston (2) coulissant et soumis à l'action d'un ressort (7), **caractérisé**
**en ce que** le piston (2) a deux surfaces (3, 4) de piston coaxiales, qui délimitent une première chambre (5) et une deuxième chambre (6),
**en ce que** la première chambre (5) peut, en fonction de la position du piston (2), être alimentée en une pression de réserve, en la pression de l'atmosphère ou en une pression se trouvant en ces deux pressions, qui peut être envoyée à la sortie (3) de la soupape (1) de frein de stationnement et
**en ce que** la deuxième chambre (6) peut être reliée, au choix, à la pression de réserve ou à la pression atmosphérique par une soupape (30) à actionnement électrique.

2. Dispositif de frein de stationnement suivant la revendication 1, **caractérisé**
**en ce que** la soupape (1) de frein de stationnement a un deuxième piston (8) coulissant et pouvant être soumis à l'action d'un deuxième ressort (9), piston qui forme, avec une paroi (10') de boîtier, un premier siège (10) de soupape et, avec le piston (2), un deuxième siège (12) de soupape, les sièges (10, 12) de soupape étant disposés de manière à ce que, si une pression définie à l'avance est dépassée dans les deux chambres (5, 6), le premier siège (10) de soupape soit fermé et le deuxième siège (12) de soupape soit ouvert et ainsi de la pression de réserve parvient, par un premier raccord (A1) de la soupape (1) de frein de stationnement à la première chambre (5) et ainsi à la soupape (31) relais.

3. Dispositif de frein de stationnement suivant la revendication 2, **caractérisé**
**en ce que** les sièges (10, 12) de soupape sont disposés de manière à ce que, si une pression définie à l'avance est dépassée dans les deux chambres (5, 6), le premier siège (10) de soupape s'ouvre et le deuxième siège (12) de soupape se ferme et la première chambre (5), et ainsi le troisième raccord (3), est reliée à la pression atmosphérique par une ouverture (22) de la soupape (1) de frein de stationnement.

4. Dispositif de frein de stationnement suivant l'une des revendications 1 à 3, **caractérisé**
**en ce qu'**un deuxième raccord (A2), qui est relié à la deuxième chambre (6), peut être relié, au choix, à la pression de réserve ou à la pression atmosphérique par une soupape (30) à commande électrique.

5. Dispositif de frein de stationnement suivant la revendication 2, **caractérisé**
**en ce que** le premier raccord (A1) de la soupape (1) de frein de stationnement peut être relié, au choix, à la pression de réserve ou à la pression atmosphérique par au moins une soupape (25, 28).

6. Dispositif de frein de stationnement suivant l'une des revendications 1 à 5, **caractérisé**
**en ce que** la sortie (A3) de la soupape (1) de frein de stationnement est reliée, en outre, à une soupape (47) de test de remorque, dont l'entrée (46) de commande pneumatique est reliée, par une soupape (45) à deux voies, à la plus haute des pressions au premier raccord (A1) et au deuxième raccord (A2).

7. Dispositif de frein de stationnement suivant la revendication 6, **caractérisé**
**en ce que** la soupape (47) de test de remorque est une soupape à coulisse ou une soupape à double siège.

8. Dispositif de frein de stationnement suivant l'une des revendications 1 à 7, **caractérisé**
**en ce que**, entre la sortie (A3) de la soupape (1) de frein de stationnement et l'entrée (32) de commande pneumatique de la soupape (31) relais, est montée une soupape (64) à deux voies, dont la première entrée (63) est reliée à la sortie (A3) de la soupape (1) de frein de stationnement et dont la deuxième entrée (64) est reliée à une ligne de moyenne pression d'un frein de service, la soupape (55) à deux voies conduisant la plus haute des pressions à ses deux entrées (63, 64) à l'entrée (32) de commande de la soupape (31) relais.

9. Dispositif de frein de stationnement suivant l'une des revendications 1 à 7, **caractérisé**
**en ce que** la sortie (35) de la soupape (31) relais est reliée à une entrée (63) d'une soupape (55) à deux voies, dont la deuxième entrée (64) est reliée à des moyens de pression d'un frein de service et dont la sortie (66) est reliée au frein (72) à ressort accumulateur.

10. Dispositif de frein de stationnement suivant l'une des revendications 6 à 9, **caractérisé**
**en ce qu'**une entrée de moyen de pression de la soupape (47) de test de remorque est reliée à la sortie (35) de la soupape (31) relais.

11. Dispositif de frein de stationnement suivant l'une des revendications 1 à 10, **caractérisé**
**en ce que** des capteurs (68, 69, 70) de pression sont raccordés au premier raccord (A1) et/ou à la sortie (A3) de la soupape (1) de frein de stationnement et/ou à la sortie (35) de la soupape (31) relais.

12. Dispositif de frein de stationnement suivant l'une des revendications 1 à 11, **caractérisé**
**en ce que** la soupape (1) de frein de stationnement a un piston (2) à gradins ayant deux surfaces de piston coaxiales.

13. Dispositif de frein de stationnement suivant l'une des revendications 1 à 11, **caractérisé**
**en ce que** les soupapes (25, 28, 30) à actionnement électrique sont des électrovannes.
